# EUROPÄISCHE PATENTANMELDUNG

(11) **EP 1 128 701 A2**
(43) Veröffentlichungstag der Anmeldung: **29.08.2001**
(21) Anmeldenummer: 01890043.1
(22) Anmeldetag: 20.02.2001
(51) Int. Cl.: H04Q 7/38

(54) **Verfahren und Einrichtung zum Auffinden von Informationen vordefinierter Personen oder geschlossener Personengruppen**

(30) Priorität: 21.02.2000 AT 1222000 U
(71) Anmelder: Walcher, Andrea, 3500 Krems (AT)
(72) Erfinder: Walcher, Andrea, 3500 Krems (AT)
(74) Vertreter: Haffner, Thomas M.

(57) **Zusammenfassung**

Bei einem Verfahren zum Auffinden von Informationen vordefinierter Personen oder geschlossener Personengruppen unter Einsatz von mobilen Telekommunikationseinrichtungen wird so vorgegangen, daß die vordefinierten Personen wenigstens einen vereinbarten Code für ihre Identifikation, für ihren Aufenthaltsort und gegebenenfalls eine definierte Information an den Telekommunikationsdienstanbieter aussenden, welcher lediglich berechtigten Personen zugänglich gemacht wird und daß bei Abfrage einer berechtigten Person diese(r) Code(s) an die abfragende Person ausgesandt wird (werden).

Bei der Einrichtung zum Auffinden von Informationen vordefinierter Personen oder geschlossener Personengruppen mit Mobilfunkgeräten und einem Mobilfunkdienstanbieter, welcher gesandte Informationen speichert und auf Abruf zur Verfügung stellt, verfügt das Mobilfunkgerät über wenigstens eine Suchtaste, über welche der Suchdienst aktivierbar ist und eine Verbindung zum Mobilfunkdienstanbieter hergestellt wird. Nach Betätigung dieser Suchtaste werden personenspezifische Daten sowie ggf. vordefinierte Daten abgesandt, gelöscht oder von anderen vordefinierten Personen abgesandte und noch nicht gelöschte Daten abgefragt.

## Beschreibung

Die Erfindung bezieht sich auf ein Verfahren zum Auffinden von Informationen vordefinierter Personen oder geschlossener Personengruppen unter Einsatz von mobilen Telekommunikationseinrichtungen sowie auf eine Einrichtung zur Durchführung dieses Verfahrens.

Mit modernen Telekommunikationsmitteln können Informationen relativ rasch an eine unbestimmte Anzahl von Personen oder an vordefinierte Personen verteilt werden. Neben der konventionellen Möglichkeit derartige Informationen auf einem Nachrichtenbrett an einer bestimmten Stelle anzuordnen, sodaß Passanten bzw. Berechtigte, welche Zutritt zu diesem Nachrichtenbrett haben, die Informationen erhalten, werden im Rahmen von Telekommunikationseinrichtungen auch Mail-Boxen zur Verfügung gestellt, in welchen Sprach-, Text- oder Bildnachrichten gespeichert werden. Wenn derartige Informationen lediglich einer definierten und bekannten geschlossenen Personengruppe zugänglich gemacht werden sollen, muß entweder dafür Sorge getragen werden, daß die entsprechenden Mail-Boxen nur von Berechtigten geöffnet werden können, was beispielsweise durch Passworte für Mail-Boxen, welche über das Internet oder Modemverbindungen zugänglich werden, sichergestellt werden kann. Aus derartigen Mail-Boxen kann über Telekommunikationseinrichtungen die gewünschte Information abgelesen werden, wobei sie jedoch je nach Umfang der in den Mail-Boxen gespeicherten Informationen noch eines aufwendigen Sortiervorganges bedarf. Wenn beispielsweise eine Gruppe von Personen die rasche Möglichkeiten haben soll, einander mitzuteilen, wo sie sich gerade befinden, oder Terminsvorschläge für ein Treffen an eine vorbestimmte Personengruppe verteilen wollen und zu diesem Zweck mobile Telekommunikationseinrichtungen eingesetzt werden sollen, gelingt dies bei den gegenwärtig bekannten Diensten nur dadurch, daß eine persönliche Kommunikation mit den jeweiligen vordefinierten Personen aufgenommen wird oder eine Nachricht in deren jeweiliger persönlicher Mail-Box hinterlegt wird.

Die Erreichbarkeit der Personen ist aber spätestens dann nicht gewährleistet, wenn das mobile Telekommunikationsgerät, wie beispielsweise das Handy, ausgeschaltet ist und das Abhören der eigenen Mail-Box, wie sie im Rahmen derartiger mobiler Telekommunikationseinrichtungen zur Verfügung gestellt werden, setzt das Abhören einer Unzahl von für die bestimmte Information irrelevanten Informationen voraus, da ja auf die Mail-Box beliebige Personen ihre Nachrichten sprechen können.

Wenn beispielsweise eine Gruppe von Personen Mitteilungen über ihren Aufenthaltsort oder Vorschläge für einen Treffpunkt allen weiteren Mitgliedern der gleichen Gruppe bekanntgeben will, erfordert dies einen relativ umfangreichen Telekommunikationsaufwand und eine große Anzahl von Einzelgesprächen bzw. einzeln abgesandten Nachrichten über Nachrichtendienste, wie z.B. SMS-Nachrichtendienst.

Das erfindungsgemäße Verfahren zielt nun darauf ab, unter Nutzung der Möglichkeiten derartiger mobiler Telefonkommunikationseinrichtungen eine besonders einfache und rasche Art der Kommunikation für eine limitierte Anzahl von derartigen Informationen einer geschlossenen Benutzergruppe zur Verfügung zu stellen, wobei das Verfahren die Einrichtung eines entsprechenden Dienstes beim Telekommunikationsanbieter und eine entsprechende Codierung der Absendung der Information sowie der Abfrage der Information erfordert. Um nun den Aufwand für den Austausch derartiger Informationen wesentlich herabzusetzen wird erfindungsgemäß vorgeschlagen, daß die vordefinierten Personen wenigstens einen vereinbarten Code für ihre Identifikation, für ihren Aufenthaltsort und gegebenenfalls eine definierte Information an den Telekommunikationsdienstanbieter aussenden, welcher lediglich berechtigten Personen zugänglich gemacht wird und daß bei Abfrage einer berechtigten Person diese(r) Code(s) an die abfragende Person ausgesandt wird (werden). Mit diesem Verfahren wird es möglich durch Betätigung einer einzigen Taste an einem Handy unmittelbar die Information über den eigenen gegenwärtigen Standort bekanntzugeben, wobei zu diesem Zweck die dem Telefondienstanwender bekannte Zelle, aus welcher die Information übertragen wird, als Orientierungshilfe dienen kann. Alternativ kann aber die codierte Information einen bestimmten Standort, welcher aus einer Auswahl von vordefinierten Standorten ausgewählt wurde, durch Absendung eines kurzen Codes übermitteln.

Wenn nun eine andere Person der geschlossenen Personengruppe an ihrem mobilen Telekommunikationsgerät eine entsprechende Taste betätigt, können unmittelbar diejenigen Informationen zur Verfügung gestellt werden, welche für den gewünschten Zweck relevant sind und insbesondere die Informationen bekanntgegeben werden, wo und zu welchem Zeitpunkt sich eine bestimmte Person der geschlossenen Personengruppe befindet oder welche Art von Vorschlägen eine bestimmte Person der geschlossenen Personengruppe zur Verfügung stellen will. Die entsprechende Codierung der Information erlaubt es somit einer geschlossenen Personengruppe eine definierte Auswahl von relevanten Informationen über einen einzelnen Tastendruck oder die Eingabe eines kurzen Codes zur Verfügung zu stellen.

Mit Vorteil kann im Rahmen des erfindungsgemäßen Verfahrens so vorgegangen werden, daß der Code mit einer Textinformation ausgesandt wird, wobei eine besonders übersichtliche Darstellung der codierten Information dadurch ermöglicht werden kann, daß die codierten Informationen nach definierten Kriterien, wie z.B. vordefinierte Personen, Aufenthaltsorte oder definierte Informationen wie Terminvorschläge, gruppiert zur Verfügung gestellt werden.

Die Interessen der geschlossenen Personengruppe können sich beispielsweise auf das Treffen in bestimmten Lokalen, auf das Besuchen bestimmter Veranstaltungsorte, Sportstätten oder Kinoveranstaltungen fokusieren, und das erfindungsgemäße Verfahren ermöglicht es durch einen einfachen Knopfdruck festzustellen, welche Person der geschlossenen Personengruppe sich gegenwärtig an einem bestimmten Ort aufhält, ohne daß hiefür eine unmittelbare persönliche Kommunikation mit der jeweiligen Person aufgenommen werden muß. Der Aufwand für die Übertragung derartiger Informationen ist somit wesentlich geringer als der Telekommunikationsaufwand im Falle einer fernmündlichen Absprache unter Verwendung mobiler Telekommunikationseinrichtungen.

Die erfindungsgemäße Einrichtung zum Auffinden von Informationen vordefinierter Personen oder geschlossener Personengruppen mit Mobilfunkgeräten und einem Mobilfunkdienstanbieter, welcher gesandte Informationen speichert und auf Abruf zur Verfügung stellt ist hiebei vorzugsweise dadurch gekennzeichnet, daß das Mobilfunkgerät über wenigstens eine Suchtaste verfügt, über welche der Suchdienst aktivierbar ist und eine Verbindung zum Mobilfunkdienstanbieter hergestellt wird und daß nach Betätigung dieser Suchtaste personenspezifische Daten sowie ggf. vordefinierte Daten abgesandt, gelöscht oder von anderen vordefinierten Personen abgesandte und noch nicht gelöschte Daten abgefragt werden. Eine derartige zusätzliche Suchtaste kann hiebei auch als frei programmierbare Taste eines Handys ausgebildet sein und einen bestimmten Code aussenden, mit welchem die eigene Position zur Verfügung gestellt wird, oder die jeweilige Position der anderen Personen der geschlossenen Personengruppe abgerufen werden. Eine derartige Suchtaste kann somit in mehrfacher Hinsicht eingesetzt werden und nicht nur zum Abruf der Informationen von anderen Personen der geschlossenen Personengruppe, sondern auch zur Absendung der eigenen Informationen herangezogen werden, wobei hier in aller Regel eine weitere Taste zur Aussendung des Codes Verwendung finden kann. Umfangreiche Textnachrichten, wie dies im Falle des SMS-Dienstes erforderlich wären, können bei der entsprechenden Codierung unterbleiben und es kann unmittelbar auf einem alphanummerischen Display auch die dem jeweiligen Code zugeordnete Nachricht als Volltext angezeigt werden. Die Einrichtung kann hiebei so ausgebildet sein, daß bei Betätigung der Suchtaste des Mobilfunkgerätes diejenigen Personen, von welchen Informationen beim Mobilfunkdienstanbieter gespeichert sind, als Liste im Display des Mobilfunkgerätes angezeigt sind und daß durch Betätigung von Cursortasten eine Person auswählbar und die zugehörige Information abrufbar ist. Alternativ kann die Einrichtung so ausgebildet sein, daß bei Betätigung der Suchtaste vordefinierte Informationen, wie z.B. Treffpunkte, Lokale, Kinos oder dgl. als Liste im Display des Mobilfunkgerätes angezeigt sind und daß durch Betätigung von Cursortasten eine Information auswählbar und die zugehörige personenspezifische Information abrufbar ist.

Die codierten Nachrichten können vom Telekommunikationsdienstanbieter in konventioneller Weise als SMS-Nachrichten ausgegeben werden, wobei die Nachrichten selbst bereits wiederum gruppiert ausgesandt werden können.

In einem typischen Anwendungsfall haben eine Reihe von Personen Lieblingstreffpunkte ausgemacht und diese Lieblingstreffpunkte in ihrem Handy gespeichert. Eine andere Person der geschlossenen Personengruppe kann nun ein bestimmtes Lokal, Kino, einen Sportclub, ein Freibad oder eine Shopping Mall oder einen anderen Lieblingsteffpunkt angeben, in welchem sie sich zu einem bestimmten Zeitpunkt befinden wird. Durch Betätigung der Suchtaste am Mobilfunkgerät eines der Teilnehmer der geschlossenen Personengruppe können nun alle Personen, die sich an einem bestimmten Ort befinden, angezeigt werden, wobei am Display beispielsweise ein bestimmter Lieblingstreffpunkt ausgewählt wird, worauf die Nachricht betreffend die an diesem Treffpunkt anwesenden Personen zur Verfügung gestellt wird. Umgekehrt kann durch Eingabe einer bestimmten Person aus der Vorauswahl im Display des Handys die Anzeige des Aufenthaltsortes oder des Vorschlages für einen Treffpunkt abgerufen werden.

Da die Liste der Lieblingstreffpunkte ebenso wie die Liste der Personen jederzeit geändert werden kann, kann eine entsprechender Dienst des Mobilfunkdienstanbieters jederzeit geändert werden, wofür nur einfache Softwareanpassungen erforderlich sind.

## Patentansprüche

1. Verfahren zum Auffinden von Informationen vordefinierter Personen oder geschlossener Personengruppen unter Einsatz von mobilen Telekommunikationseinrichtungen, dadurch gekennzeichnet, daß die vordefinierten Personen wenigstens einen vereinbarten Code für ihre Identifikation, für ihren Aufenthaltsort und gegebenenfalls eine definierte Information an den Telekommunikationsdienstanbieter aussenden, welcher lediglich berechtigten Personen zugänglich gemacht wird und daß bei Abfrage einer berechtigten Person diese(r) Code(s) an die abfragende Person ausgesandt wird (werden).

2. Verfahren nach Anspruch 1, dadurch gekennzeichnet, daß der Code mit einer Textinformation ausgesandt wird.

3. Verfahren nach Anspruch 1 oder 2, dadurch gekennzeichnet, daß die codierten Informationen nach definierten Kriterien, wie z.B. vordefinierte Personen, Aufenthaltsorte oder definierte Informationen wie Terminvorschläge, gruppiert zur Verfügung gestellt werden.

4. Einrichtung zum Auffinden von Informationen vordefinierter Personen oder geschlossener Personengruppen mit Mobilfunkgeräten und einem Mobilfunkdienstanbieter, welcher gesandte Informationen speichert und auf Abruf zur Verfügung stellt, dadurch gekennzeichnet, daß das Mobilfunkgerät über wenigstens eine Suchtaste verfügt, über welche der Suchdienst aktivierbar ist und eine Verbindung zum Mobilfunkdienstanbieter hergestellt wird und daß nach Betätigung dieser Suchtaste personenspezifische Daten sowie ggf. vordefinierte Daten abgesandt, gelöscht oder von anderen vordefinierten Personen abgesandte und noch nicht gelöschte Daten abgefragt werden.

5. Einrichtung nach Anspruch 4, dadurch gekennzeichnet, daß bei Betätigung der Suchtaste des Mobilfunkgerätes diejenigen Personen, von welchen Informationen beim Mobilfunkdienstanbieter gespeichert sind, als Liste im Display des Mobilfunkgerätes angezeigt sind und daß durch Betätigung von Cursortasten eine Person auswählbar und die zugehörige Information abrufbar ist.

6. Einrichtung nach Anspruch 4 oder 5, dadurch gekennzeichnet, daß bei Betätigung der Suchtaste vordefinierte Informationen, wie z.B. Treffpunkte, Lokale, Kinos oder dgl. als Liste im Display des Mobilfunkgerätes angezeigt sind und daß durch Betätigung von Cursortasten eine Information auswählbar und die zugehörige personenspezifische Information abrufbar ist.
